# EUROPEAN PATENT APPLICATION

(11) **EP 3 369 942 A1**
(43) Date of publication of application: **05.09.2018**
(21) Application number: 16859496.8
(22) Date of filing: 04.10.2016
(51) Int. Cl.: F15B 1/26, B01D 24/38, B01D 29/01, B01D 29/07, B01D 29/88

(54) **RETURN FILTER**

(30) Priority: 26.10.2015 JP 2015210264
(71) Applicant: Yamashin-Filter Corp., Yokohama-shi, Kanagawa 231-0062 (JP)
(72) Inventor: OSHITA Tatsuhiro, Yokohama-shi Kanagawa 235-0033 (JP); TAKU Meiho, Yokohama-shi Kanagawa 235-0033 (JP); ISHIZUKA Makoto, Yokohama-shi Kanagawa 235-0033 (JP)
(74) Representative: Winter, Brandl, Fürniss, Hübner, Röss, Kaiser, Polte - Partnerschaft mbB
(86) International application number: PCT/JP2016/079425
(87) International publication number: WO 2017/073259

(57) **Abstract**

In order to prevent discharge of bubbles near a bottom surface of a tank, a first discharge tube (31) having a substantially cylindrical shape with openings at both ends is inserted through an outflow hole (10c) of a filter case (19) and provided protruding toward the bottom surface of the tank. A second discharge tube (32) having a substantially cylindrical shape is provided so as to cover the first discharge tube (31). The second discharge tube (32) includes a first end (32a) that comes into contact with a bottom surface (10b) of the filter case (19), and is provided protruding from the bottom surface (10b) of the filter case (19) toward the bottom surface of the tank. A tip end (32b) of the second discharge tube (32) is covered by a bottom surface cover (32c), and a plurality of discharge holes (32d) are formed in a region near an upper end of a side surface. As a result, oil discharged from the outflow hole (10c) flows downward through the first discharge tube (31), then flows upward between the first discharge tube (31) and the second discharge tube (32), and is discharged from a region near an upper end of the second discharge tube (32).

## Description

### Technical Field

The present invention relates to a return filter.

### Background Art

Patent Document 1 discloses a filter for a return circuit that is provided with an oil tight retaining tube that protrudes downward below a filter element, and a diffuser that includes a plurality of small holes and protrudes in a lateral direction from a tip end of the oil tight retaining tube.

### Citation List

### Patent Document

Patent Document 1: JP 59-61819 A

### Summary of Invention

### Technical Problem

However, according to the invention described in Patent Document 1, oil that flows from the diffuser collides with a bottom surface of a tank, possibly causing bubbles to form near the tank bottom surface. The bubbles that form near the tank bottom surface readily flow into a suction strainer, and are therefore preferably eliminated to the extent possible near the tank bottom surface.

In light of the above, an object of the present invention is to provide a return filter capable of preventing discharge of bubbles near a tank bottom surface.

### Solution to Problem

To solve the above-described problems, a return filter according to the present invention is provided to an interior of a tank, for example, and includes a filter element comprising a filtration member having a substantially cylindrical shape; a filter case that has a bottomed substantially cylindrical shape inside which the filter element is disposed, and includes a side surface provided with an inflow hole and a bottom surface provided with an outflow hole; a first discharge tube that has a substantially cylindrical shape with openings at both ends, is inserted through the outflow hole, and is provided protruding toward a bottom surface of the tank; and a second discharge tube that has a substantially cylindrical shape, is provided protruding from the bottom surface of the filter case toward the bottom surface of the tank to cover the first discharge tube, and includes a first end that comes into contact with the bottom surface of the filter case, a second end other than the first end that is covered by a bottom surface cover, and a side surface provided with a plurality of discharge holes formed in a region near the bottom surface of the filter case.

According to the return filter of the present invention, the first discharge tube having a substantially cylindrical shape with openings at both ends is inserted through the outflow hole of the filter case and provided protruding from the bottom surface of the filter case toward the bottom surface of the tank. The second discharge tube having a substantially cylindrical shape is provided protruding from the bottom surface of the filter case toward the bottom surface of the tank so as to cover the first discharge tube. The second discharge tube includes the first end that comes into contact with the bottom surface of the filter case, and the second end that is covered by the bottom surface cover. The second discharge tube further includes the side surface provided with the plurality of discharge holes formed in a region near the bottom surface of the filter case (a region near an upper end). As a result, oil discharged from the outflow hole of the filter case flows downward through the first discharge tube, then flows upward between the first discharge tube and the second discharge tube, and is discharged from only the region near the bottom surface of the filter case. Thus, it is possible to prevent discharge of bubbles near the tank bottom surface.

Here, the discharge holes may have diameters that increase as a distance to the bottom surface of the filter case decreases. A greater amount of oil is thus discharged from the holes that, among the discharge holes, are positioned further upward, making it possible to discharge as much oil (including bubbles) as possible to a position close to an oil surface.

Here, the discharge holes may be formed so that a total of a surface area of each of the discharge holes is greater than or equal to a difference between a surface area of the second discharge tube and a surface area of the first discharge tube in a cross section orthogonal to a center axis of the second discharge tube. Thus, it is possible to discharge the oil that flows between the first discharge tube and the second discharge tube to the outside without accumulation in an interior of the second discharge tube.

Here, the return filter may be provided adjacent to a first wall surface of the tank, and the discharge holes may be formed only in a substantially semicircular region facing the first wall surface. Thus, the oil discharged from the return filter is discharged toward the first wall surface, making it possible to prevent the oil discharged from the return filter from being discharged toward the suction strainer. As a result, the bubbles contained in the oil discharged from the return filter are less susceptible to being suctioned into the suction strainer.

Here, the bottom surface cover may have a substantially truncated cone shape with a tip end protruding into an interior of the second discharge tube. As a result, the oil flows along the bottom surface cover, making it possible to naturally form a flow of oil and reduce the formation of bubbles.

### Advantageous Effects of Invention

According to the present invention, it is possible to prevent discharge of bubbles near a tank bottom surface.

### Brief Description of Drawings

FIG. 1 is a front view illustrating an overview of a hydraulic oil tank 100 inside which a return filter 1 according to an embodiment of the present invention is disposed.
FIG. 2 is a side view illustrating an overview of the hydraulic oil tank 100 inside which the return filter 1 is disposed.
FIG. 3 is a front view illustrating a perspective view of main parts of the hydraulic oil tank 100.
FIG. 4 is a side view illustrating an overview of a hydraulic oil tank 100A inside which a return filter 2 according to an embodiment of the present invention is disposed.
FIG. 5 is a front view illustrating an overview of a hydraulic oil tank 100' inside which a return filter 1' of the related art is disposed.

### Description of Embodiments

Below, detailed description of embodiments of the present invention will be given with reference to the drawings.

### First Embodiment

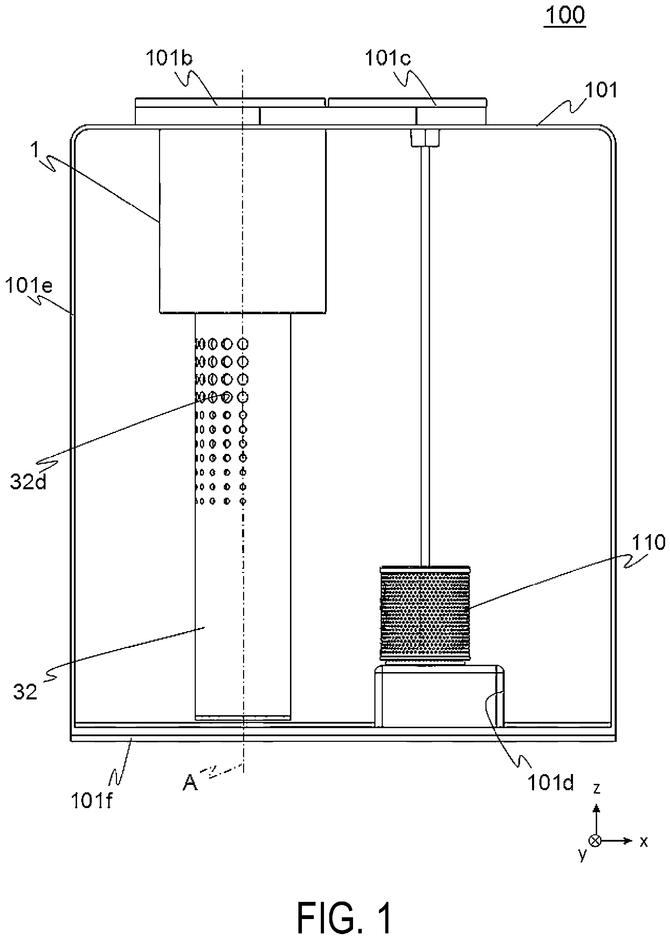

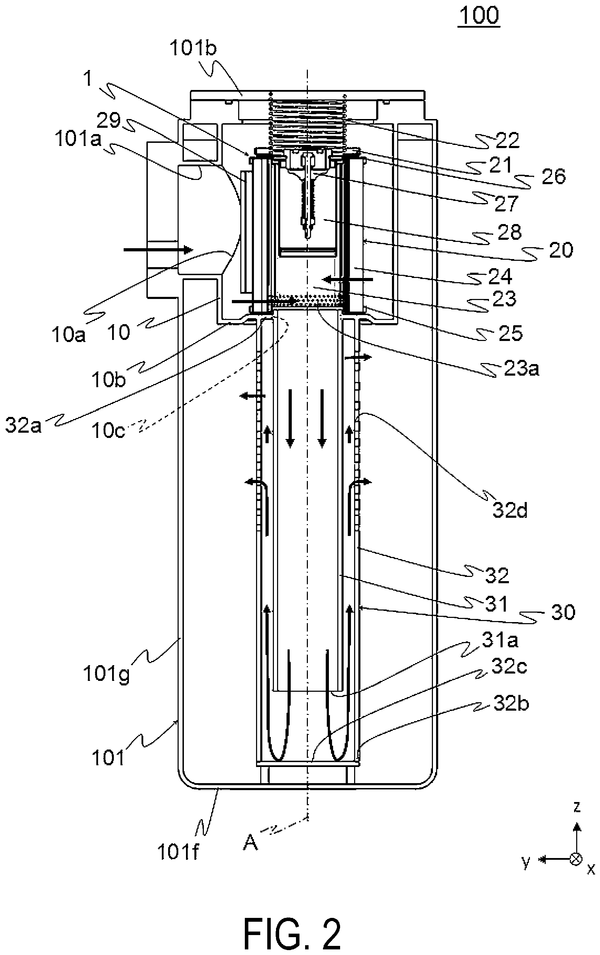

FIG. 1 is a front view illustrating an overview of a hydraulic oil tank 100 inside which a return filter 1 according to an embodiment of the present invention is disposed. FIG. 2 is a side view illustrating an overview of the hydraulic oil tank 100 inside which the return filter 1 is disposed. In FIGS. 1 and 2, main parts of the hydraulic oil tank 100 are illustrated from a perspective view. Further, FIG. 2 illustrates a cross section of the main parts (note that hatching indicating a cross section is omitted).

The hydraulic oil tank 100 is installed in a work machine (a hydraulic apparatus, for example, not illustrated), and is disposed inside a hydraulic circuit of hydraulic oil supplied to the hydraulic apparatus and is configured to store the hydraulic oil. In the hydraulic circuit, the hydraulic oil passes through the hydraulic apparatus and is introduced into the hydraulic oil tank 100.

The hydraulic oil tank 100 includes a tank main body 101 having a box shape, for example, and this tank main body 101 has a hollow interior. The tank main body 101 primarily includes the return filter 1 and a suction strainer 110 (refer to FIG. 1).

The return filter 1 is provided adjacent to a wall surface 101e (refer to FIG. 1) of the tank main body 101. An inflow port 101a configured to allow the hydraulic oil to flow into the tank main body 101 is formed on a wall surface 101g (refer to FIG. 2) of the tank main body 101. The hydraulic oil that has entered through the inflow port 101a is introduced into the return filter 1. The hydraulic oil is filtered by the return filter 1 and stored in the tank main body 101.

Lids 101b, 101c used for maintenance and the like of the return filter 1 and the suction strainer 110 are provided on an upper end portion of the tank main body 101. The return filter 1 is attached to the lid 101b.

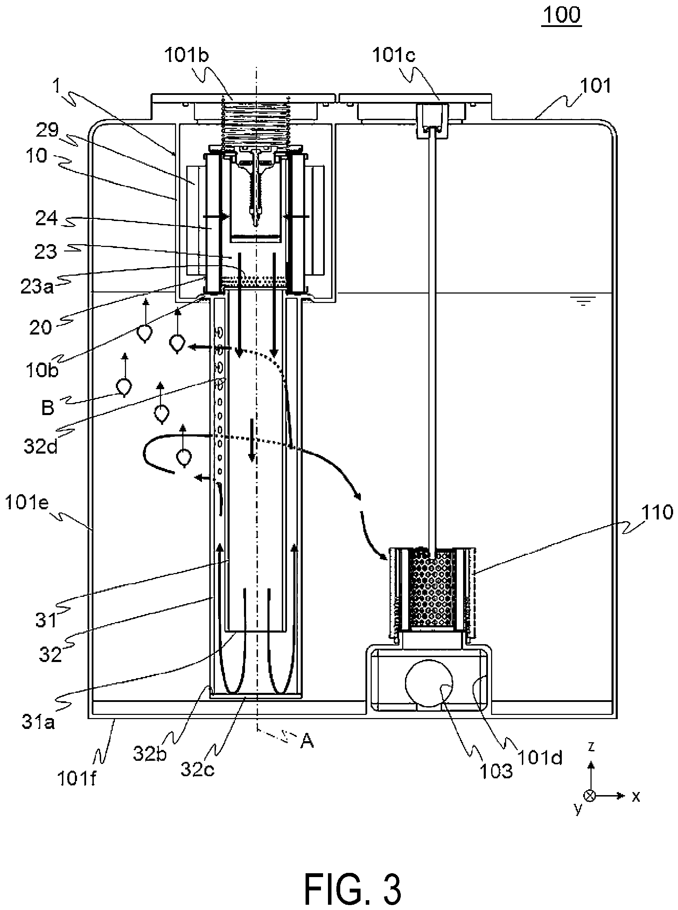

An outflow port 101d (refer to FIG. 1) that allows the hydraulic oil inside the tank main body 101 to flow out to a hydraulic pump (not illustrated) is formed near a bottom surface 101f of the tank main body 101. A suction pipe 103 (refer to FIG. 3) that leads to a suction port of the hydraulic pump (not illustrated) is fitted into the outflow port 101d from an outer side of the tank main body 101.

To prevent foreign matter from entering the suction pipe 103, the suction strainer 110 is provided on an upper side of the outflow port 101d (inner side of the tank main body 101). The hydraulic oil stored in the tank main body 101 is suctioned into the hydraulic pump (not illustrated), flows out to the suction pipe 103 via the suction strainer 110, and is supplied once again to the hydraulic apparatus.

Next, the return filter 1 will be described using FIG. 2. In FIG. 2, the flow of the oil is indicated by the arrows. The return filter 1 mainly includes a filter case 10, a filter element 20, and a discharge portion 30.

The filter case 10 is a member having a bottomed substantially cylindrical shape, and is formed from a metal. The filter case 10 includes an upper end integrally formed with the tank main body 101. Further, an opening of the upper end of the filter case 10 is covered by the lid 101b.

An inflow hole 10a that allows the oil to flow into a space in the interior of the filter case 10 is formed in a side surface of the filter case 10. The inflow hole 10a is communicated with the inflow port 101a formed in the tank main body 101. The hydraulic oil that entered from the inflow port 101a and the inflow hole 10a is introduced into a space between the filter case 10 and the filter element 20.

An outflow hole 10c that allows the oil filtered by the filter element 20 to flow outward is formed in a bottom surface 10b of the filter case 10. In the present embodiment, a first discharge tube 31 (described later) is inserted into and integrated with an inner peripheral surface of the outflow hole 10c, and thus the outflow hole 10c is schematically illustrated by a dashed line in FIG. 2.

The filter element 20 is a member having a substantially cylindrical shape and provided in the filter case 10. A lid body 21 is provided to an upper end of the filter element 20, and an elastic member 22 is provided between the lid body 21 and the lid 101b. The filter element 20 is pressed downward (in the -z direction) by the elastic member 22, fixing the filter element 20 in the interior of the filter case 10.

The filter element 20 mainly includes an inner tube 23, a filtration member 24, and plates 25, 26.

The inner tube 23 is a member having a substantially hollow cylindrical shape with openings at both ends. The inner tube 23 is formed using a resin or a metal that is a material having high corrosion resistance. Holes 23a through which the hydraulic oil passes are formed substantially in an entire region of the inner tube 23.

The filtration member 24 is provided on an outer side of the inner tube 23. The filtration member 24 has a substantially cylindrical shape and a thickness in a radial direction. A height of the filtration member 24 is substantially the same as a height of the inner tube 23. The filtration member 24 is formed by pleating a filter paper formed of a synthetic resin, paper, or the like, and connecting both ends of the pleated filter paper to form a cylindrical shape. As a result, the filtration member 24 is formed into a substantially cylindrical pleated shape. The filtration member 24 is configured to filter the hydraulic oil.

The plate 25 is provided to first ends of the inner tube 23 and the filtration member 24, and the plate 26 is provided to second ends. The plate 25 and the plate 26 are members having a substantially circular plate shape or a bottomed substantially cylindrical shape, and are formed from a resin or a metal.

The plate 25 and the plate 26 are provided so as to cover end surfaces of the inner tube 23 and the filtration member 24. In other words, the plate 25 and the plate 26 sandwich the inner tube 23 and the filtration member 24.

The plate 25 covers lower ends of the inner tube 23 and the filtration member 24. A bottom surface of the plate 25 comes into contact with the bottom surface 10b, and an inner peripheral surface of the plate 25 is fitted to the first discharge tube 31 (described in detail later).

A sealing member (not illustrated) that prevents the hydraulic oil before filtration from entering the first discharge tube 31 from between the plate 25 and the filter case 10 is provided to the inner peripheral surface or the bottom surface of the plate 25.

The plate 26 covers upper ends of the inner tube 23 and the filtration member 24. The lid body 21 comes into contact with the plate 26 so that the oil before filtration does not enter from the openings of the inner tube 23 and the filtration member 24.

A valve 27 is provided to the lid body 21. The valve 27 is configured to open and close depending on a difference between a pressure between the filter case 10 and the filter element 20 (on an outer side of the filter element 20), and a pressure on an inner side of the filter element 20. An outer peripheral surface of the valve 27 is fitted to an inner peripheral surface of a bypass strainer 28.

The bypass strainer 28 has a substantially cylindrical shape as a whole, and includes a filtration portion that has a mesh shape and filters the unfiltered oil that enters when the valve 27 is open.

A buffer plate 29 is provided around the filter element 20. The buffer plate 29 is a member having a substantially semi-cylindrical plate shape, and is configured to prevent the hydraulic oil that entered through the inflow port 101a and the inflow hole 10a from directly coming into contact with the filter element 20.

The discharge portion 30 mainly includes the first discharge tube 31 and a second discharge tube 32. The first discharge tube 31 and the second discharge tube 32 are members having a substantially cylindrical shape, and are provided protruding from the bottom surface 10b toward the bottom surface 101f (downward (in the -z direction)).

The first discharge tube 31 is provided on a same axis as the second discharge tube 32 in the interior of the second discharge tube 32. That is, a center axis A of the first discharge tube 31 and the center axis A of the second discharge tube 32 are the same.

The first discharge tube 31 has a substantially cylindrical shape with openings at both ends, and is inserted through the inner peripheral surface of the outflow hole 10c and the inner peripheral surface of the plate 25. An outer periphery of the first discharge tube 31 and an inner periphery of the outflow hole 10c are integrated by welding or the like. Holes are not formed in a side surface (cylindrical surface) of the first discharge tube 31.

The second discharge tube 32 has a substantially cylindrical shape covered at both ends, and is provided so as to cover the first discharge tube 31. A diameter of the second discharge tube 32 is greater than a diameter of the first discharge tube 31, and a length of the second discharge tube 32 is greater than a length of the first discharge tube 31.

The diameter of the second discharge tube 32 is formed so that a difference between a surface area of the second discharge tube 32 and a surface area of the first discharge tube 31, each surface being a surface orthogonal to the center axis A (hereinafter referred to as an "orthogonal surface"), is greater than or equal to a surface area of an orthogonal surface of the first discharge tube 31. Further, the length of the second discharge tube 32 is formed so that a product of the surface area of the second discharge tube 32 and a distance between an end 32b of the second discharge tube 32 and a tip end (end 31a) of the first discharge tube 31 is greater than or equal to the surface area of an orthogonal surface of the first discharge tube 31. As a result, the oil discharged from the first discharge tube 31 enters between the first discharge tube 31 and the second discharge tube 32 in a stable manner.

One end 32a of the second discharge tube 32 comes into contact with the bottom surface 10b of the filter case 10, and is integrated by welding or the like. The other end 32b of the second discharge tube 32 is covered by a bottom surface cover 32c having a plate shape.

The second discharge tube 32 includes a side surface (cylindrical surface) provided with a plurality of discharge holes 32d formed in a region near the bottom surface 10b (a region near an upper end of the second discharge tube 32). In the present embodiment, a region near the bottom surface 10b refers to a region from the upper end of the second discharge tube 32 to about substantially half the height, and does not include a portion that comes into contact with the bottom surface 10b. However, the region near the bottom surface 10b is not limited to this form. For example, the region near the bottom surface 10b may include a portion that comes into contact with the bottom surface 10b. Further, a lower end of the region near the bottom surface 10b may be positioned higher than the position illustrated in FIGS. 1 and 2 (upward (on the +z side)).

As illustrated in FIG. 1, the discharge holes 32d have diameters that increase as the distance to the bottom surface 10b decreases. That is, the discharge holes 32d have diameters that increase as the distance to the end 32a decreases, and decrease as the distance to the end 32b decreases.

Further, the discharge holes 32d are formed only in a substantially semicircular region (the region of the left semicircle in FIG. 1) facing the wall surface 101e. This is to prevent the oil that flows between the first discharge tube 31 and the second discharge tube 32 from discharging toward a center of the tank main body 101.

Here, the discharge holes 32d are formed so that a total of a surface area of each of the discharge holes 32d is greater than or equal to a difference between the surface area of an orthogonal surface of the second discharge tube 32 and the surface area of an orthogonal surface of the first discharge tube 31. Thus, it is possible to discharge the oil that flows between the first discharge tube 31 and the second discharge tube 32 to the outside without accumulation in the interior of the second discharge tube 32.

Next, the flow of the oil inside the return filter 1 and the tank main body 101 will be described using FIG. 3. FIG. 3 is a front view illustrating a perspective view of main parts of the hydraulic oil tank 100. FIG. 3 illustrates a cross section of the main parts (note that hatching indicating a cross section is omitted). In FIG. 3, the flow of the oil is indicated by the arrows.

The hydraulic oil that flowed from the inflow port 101a and the inflow hole 10a (not illustrated in FIG. 3) is introduced into a space between the filter case 10 and the filter element 20. The oil that flowed into the space between the filter case 10 and the filter element 20 is filtered by the filtration member 24. The oil after filtration flows through the holes 23a formed in the inner tube 23 and into the space on an inner side of the inner tube 23. The bubbles produced during filtration and the like are included in the oil after this filtration.

The oil after filtration that flowed into the space on the inner side of the inner tube 23 flows downward (in the -z direction) in the interior of the first discharge tube 31, and is discharged from an opening formed in the end 31a of the first discharge tube 31 into the interior of the second discharge tube 32.

The end 32b of the second discharge tube 32 is covered by the bottom surface cover 32c, and thus the oil that flowed into the interior of the second discharge tube 32 flows upward (in the +z direction) through the space between the first discharge tube 31 and the second discharge tube 32.

The oil that flowed upward through the space between the first discharge tube 31 and the second discharge tube 32 is discharged from the discharge holes 32d into the interior of the tank main body 101. The discharge holes 32d have diameters that increase as the distance to the bottom surface 10b decreases, and thus a greater amount of oil flows from the holes that, among the discharge holes 32d, are positioned further upward (closer to the bottom surface 10b). As a result, it is possible to discharge as much oil, that is, bubbles B, as possible to a position close to the oil surface. Further, the oil flows upward through the space between the first discharge tube 31 and the second discharge tube 32, and thus the discharged oil and bubbles B flow to the upper side toward the oil surface. Thus, the bubbles B are not discharged near the bottom surface 101f, making the bubbles B less susceptible to being suctioned into the suction strainer 110.

The discharge holes 32d are formed only in the substantially semicircular region (the left semicircular region in FIG. 3) facing the wall surface 101e. As a result, the oil that flows through the space between the first discharge tube 31 and the second discharge tube 32 is discharged only on the left side in FIG. 3 and not on the right side in FIG. 3. That is, the oil discharged from the return filter 1 is discharged toward the wall surface 101e but not toward the center of the tank main body 101, that is, toward the suction strainer 110. As a result, it is possible to make the bubbles B included in the oil discharged from the return filter 1 less susceptible to being suctioned into the suction strainer 110.

According to the present embodiment, the oil (that is, the bubbles B) filtered by the return filter 1 can be discharged from a position close to the oil surface, preventing the oil from being discharged from a position near the bottom surface 101f. As a result, it is possible to make the bubbles B less susceptible to being suctioned into the suction strainer 110, thereby decreasing pump faults and the like.

Further, according to the present embodiment, the oil filtered by the return filter 1 is discharged only from the substantially semicircular region facing the wall surface 101e adjacent to the return filter 1, making the bubbles B included in the oil filtered by the return filter 1 even less susceptible to being suctioned by the suction strainer 110.

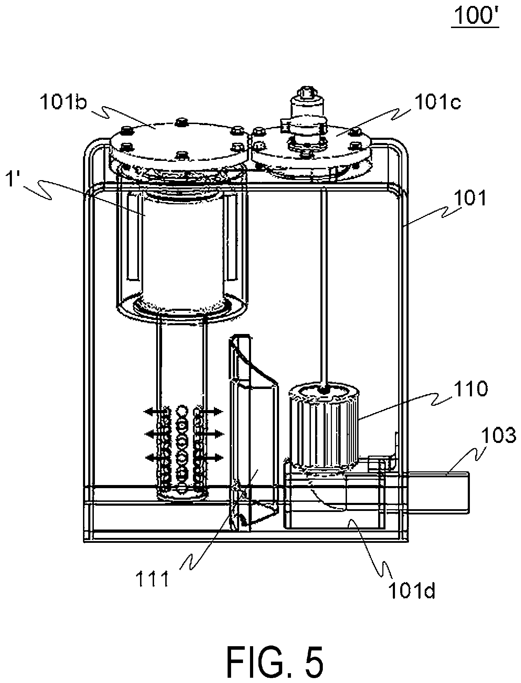

Further, according to the present embodiment, a partition plate provided to the interior of a tank 100 of the related art can be eliminated. FIG. 5 is a front view illustrating an overview of a hydraulic oil tank 100' inside which a return filter 1' of the related art is disposed. Oil that contains bubbles is discharged from the return filter 1' toward the suction strainer 110 and thus, to prevent the suction strainer 110 from suctioning the bubbles, a partition plate 111 needs to be provided so that the oil (containing the bubbles) discharged from the return filter 1' does not come into direct contact with the suction strainer 110. However, in the present embodiment, the oil filtered by the return filter 1 is discharged only from the substantially semicircular region facing the wall surface 101e, making the partition plate 111 unnecessary. This makes it possible to simplify the configuration of the hydraulic oil tank 100 and reduce costs.

Note that while, in the present embodiment, the lengths of the first discharge tube 31 and the second discharge tube 32 were set so that the end 32b of the second discharge tube 32 is positioned near the bottom surface 101f, the lengths of the first discharge tube 31 and the second discharge tube 32 are not limited thereto. However, to ensure that the oil and the bubbles B discharged from the discharge holes 32d readily flow toward the oil surface to an upper side, the lengths of the first discharge tube 31 and the second discharge tube 32 are preferably made as long as possible. Further, while, in the present embodiment, the discharge holes 32d are formed in a substantially semicircular manner around the second discharge tube 32, the discharge holes 32d may be formed around the entire circumference of the second discharge tube 32 depending on the size of the tank main body 101 and the arranged position of the suction strainer 110.

### Second Embodiment

In the first embodiment of the present invention, the end 32b of the second discharge tube 32 is covered by the bottom surface cover 32c having a plate shape. The form of covering the end 32b, however, is not limited thereto.

In a second embodiment of the present invention, the end 32b of the second discharge tube 32 is covered by a bottom surface cover having a substantially truncated cone shape. Below, description is given of a return filter 2 according to the second embodiment. The difference between the return filter 1 and the return filter 2 is only the bottom surface cover that covers the end 32b, and thus descriptions of the portions that are the same in the return filter 1 and the return filter 2 will be omitted.

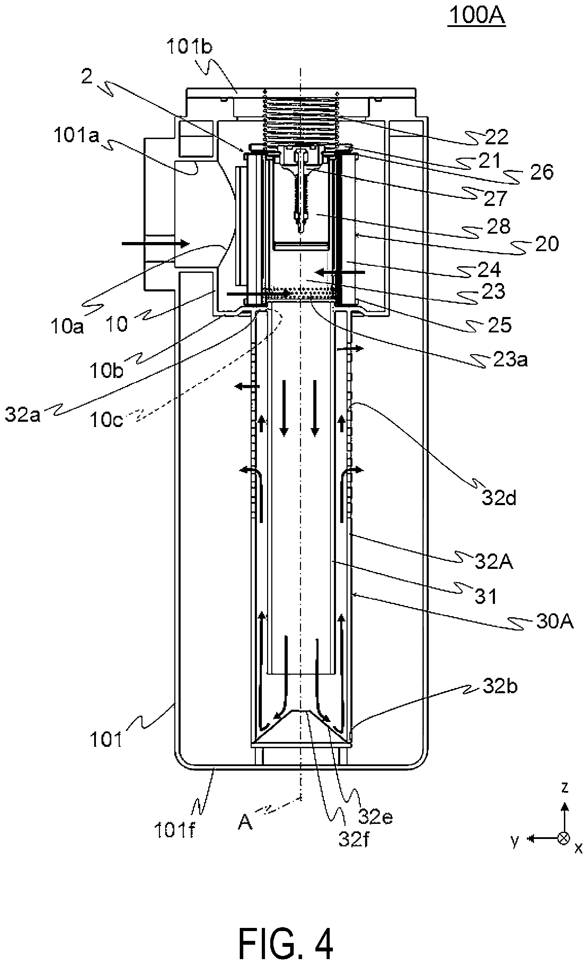

FIG. 4 is a side view illustrating an overview of a hydraulic oil tank 100A inside which the return filter 2 is disposed. FIG. 4 illustrates a cross section of the main parts of the hydraulic oil tank 100A from a perspective view (note that hatching indicating a cross section is omitted). In FIG. 4, the flow of the oil is indicated by the arrows.

A discharge portion 30A mainly includes the first discharge tube 31 and a second discharge tube 32A. The end 32b of the second discharge tube 32A is covered by a bottom surface cover 32e.

The bottom surface cover 32e has a substantially truncated cone shape, and is provided so that a tip end 32f protrudes into an interior of the second discharge tube 32A (protrudes upward). The oil that flows downward through the interior of the first discharge tube 31 collides with the bottom surface cover 32e, and flows toward an outer peripheral surface of the second discharge tube 32A along the bottom surface cover 32e. Subsequently, the oil collides with an outer peripheral surface of the second discharge tube 32A and changes to an upward flow.

According to the present embodiment, the bottom surface cover 32e is formed into a substantially truncated cone shape, and thus the oil flows along the bottom surface cover 32e, making it possible to naturally form a flow of oil. Thus, an upward flow is created in the oil that flowed downward from the first discharge tube 31 into the interior of the second discharge tube 32A, allowing the oil that flowed upward to naturally flow into the space between the first discharge tube 31 and the second discharge tube 32A. Further, such a configuration makes it possible to prevent the bubbles B from being produced in the oil when the oil collides with the bottom surface cover 32e.

Embodiments of the invention have been described in detail with reference to the drawings; however, specific configurations are not limited to the embodiments, and changes in the design or the like are also included within a scope which does not depart from the gist of the invention. For example, the above examples have been explained in detail in order to facilitate understanding of the present invention and are not necessarily limited to examples provided with the entirety of the configuration described above. In addition, the configuration of an embodiment may be partially replaced with the configuration of a different embodiment, or the configuration of the different embodiment may be added to, deleted from, or replaced with the configuration of the embodiment.

Further, the term "substantially" in the present invention is not to be understood as merely being strictly the same, and is a concept that includes variations and modifications to an extent that does not result in loss in identity. For example, the term "substantially semicircular" is not limited to being strictly semicircular, and is a concept that includes variations of several degrees (variations of about several millimeters, for example). Further, simple expressions such as orthogonal, parallel, and the same are not to be understood as merely being strictly orthogonal, parallel, the same, and the like, and include being substantially parallel, substantially orthogonal, substantially the same, and the like.

Furthermore, the meaning of the term "near" in the present invention includes a region of a range (which can be determined as desired) close to a position serving as a reference. For example, the term "near an end" refers to a region of a range close to the end, and is a concept indicating that the end may or may not be included.

### Reference Signs List

1, 2 Return filter
10 Filter case
10a Inflow hole
10b Bottom surface
10c Outflow hole
20 Filter element
21 Lid body
22 Elastic member
23 Inner tube
23a Hole
24 Filtration member
25, 26 Plate
27 Valve
28 Bypass strainer
29 Buffer plate
30, 30A Discharge portion
31 First discharge tube
31a End
32, 32A Second discharge tube
32a, 32b End
32c, 32e Bottom surface cover
32d Discharge hole
32f Tip end
100, 100A Hydraulic oil tank
101 Tank main body
101a Inflow port
101b, 101c Lid
101d Outflow port
101e, 101g Wall surface
101f Bottom surface
103 Suction pipe
110 Suction strainer

## Claims

1. A return filter provided to an interior of a tank, comprising:
a filter element comprising a filtration member having a substantially cylindrical shape;
a filter case that has a bottomed substantially cylindrical shape inside which the filter element is disposed, and comprises a side surface provided with an inflow hole and a bottom surface provided with an outflow hole;
a first discharge tube that has a substantially cylindrical shape with openings at both ends, is inserted through the outflow hole, and is provided protruding toward a bottom surface of the tank; and
a second discharge tube that has a substantially cylindrical shape, is provided protruding from the bottom surface of the filter case toward the bottom surface of the tank to cover the first discharge tube, and comprises a first end that comes into contact with the bottom surface of the filter case, a second end other than the first end that is covered by a bottom surface cover, and a side surface that comprises a plurality of discharge holes formed in a region near the bottom surface of the filter case.

2. The return filter according to claim 1, wherein the discharge holes have diameters that increase as a distance to the bottom surface of the filter case decreases.

3. The return filter according to claim 1 or 2, wherein the discharge holes are formed such that a total of a surface area of each of the discharge holes is greater than or equal to a difference between a surface area of the second discharge tube and a surface area of the first discharge tube in a cross section orthogonal to a center axis of the second discharge tube.

4. The return filter according to any one of claims 1 to 3, wherein:
the return filter is provided adjacent to a first wall surface of the tank; and
the discharge holes are formed only in a substantially semicircular region facing the first wall surface.

5. The return filter according to any one of claims 1 to 4, wherein the bottom surface cover has a substantially truncated cone shape with a tip end protruding into an interior of the second discharge tube.
